Europäisches Patentamt

European Patent Office

Office européen des brevets

(11) Publication number: **0 316 714**
**A2**

## EUROPEAN PATENT APPLICATION

(21) Application number: 88118563.1

(51) Int. Cl.⁴: **B29C 65/74** , **B26D 3/12**

(22) Date of filing: 08.11.88

(30) Priority: 13.11.87 US 119867

(43) Date of publication of application:
24.05.89 Bulletin 89/21

(84) Designated Contracting States:
AT BE CH DE ES GB IT LI NL SE

(71) Applicant: THE DOW CHEMICAL COMPANY
2030 Dow Center Abbott Road P.O. Box 1967
Midland Michigan 48640-1967(US)

(72) Inventor: Russel, Patrick M.
4451 Wise Road
Freeland Michigan 48640(US)
Inventor: Woods, Timothy R.
3200 Fairlane
Midland Michigan 48640(US)
Inventor: Pihlaja, Roger K.
5326 Sanford Lake Road
Sanford Michigan 48657(US)

(74) Representative: Sternagel, Hans-Günther, Dr.
et al
Patentanwälte Dr. Michael Hann Dr. H.-G.
Sternagel Sander Aue 30
D-5060 Bergisch Gladbach 2(DE)

(54) Method and apparatus for severing and sealing thermoplastic materials.

(57) A process and apparatus for severing and simultaneously sealing a plurality of plies of thermoplastic material to form bags for storing foods therein is provided. A severing and sealing element fabricated from a long range ordered alloy is used. The use of that alloy provides increased element life at higher operating temperatures while significantly reducing odor and off-flavor problems in the bags.

EP 0 316 714 A2

## METHOD AND APPARATUS FOR SEVERING AND SEALING THERMOPLASTIC MATERIALS

This invention relates to the severing and sealing of thermoplastic materials, and more particularly to the use of a heating element operating at a temperature above about 565°C to simultaneously sever and seal edge portions of layers of thermoplastic material used to form bags, or the like.

In the process of manufacturing thermoplastic bags or other containers which may include a thickened closure or other thickened sections of thermoplastic material, the bag stock is typically supplied in the form of a continuous web. In forming individual bags, portions of the thermoplastic material are severed from the web. These severed areas become the side seams for the bag and are typically sealed at the same time the material is severed from the web.

To accomplish this severing and sealing operation, a "cutter-sealer" element is used which is typically in the form of a metal alloy wire of circular or elliptical cross-section. To cut through and seal both the main body and thickened portions of the thermoplastic material, such as a polyethylene resin, presently, the wire is heated to a temperature above about 349°C, typically from 427°C to 482°C, which is above the melting temperature of the material.

A significant problem with such prior art cutter-sealer elements was their relatively short lifespan. Because of the elevated temperatures of operation and stresses involved with severing the thermoplastic materials, prior cutter-sealer elements suffered from oxidation of the metal, creep and fatigue, and stress ruptures. Accordingly, operating temperatures were attempted to be kept low to increase element life. The down time of the equipment used for plastic bag production due to cutter-sealer element failure was significant, and frequent replacement of the cutter-sealer elements was expensive.

Another problem with such elements was that degraded polymer, created by the contact of the hot element with the thermoplastic resin, would result in the formation of waxy substances which would build up on the cutting and sealing equipment, thereby reducing its efficiency. Frequent cleaning of the equipment was required, with concomitant down time for the bag production operation.

Contact of the thermoplastic resin with the hot element would also produce gaseous polymer degradation products during the severing and sealing operation. Some of those gaseous products would become entrapped on the surface or in the bags which were formed. The presence of such gaseous degradation products produced noticeable odors, as well as producing off-flavor problems for foods later stored within the bags.

More recently, there have been attempts to address these problems. For example, Tumminia, U.S. Patent No. 4,396,449, addressed the wax build up and fatigue problems on the sealing equipment by designing a cutter-sealer element profile having a much greater height than width. The Tumminia cutter-sealer elements were fabricated from nickel and/or chromium alloys such as Inconel 625.

However, problems with such cutter-sealer elements do remain. Accordingly, the need still exists in the art for a cutting and sealing element and process which provides a long cutter element life, avoids wax build up on the sealing equipment, and alleviates taste and odor problems.

The present invention meets that need by providing a method and apparatus for severing and sealing plies of thermoplastic materials. The present invention is ideally suited for a high speed process for cutting and sealing plastic films for forming bags or other containers, and particularly with respect to reducing taste and odor perceptions in food-grade plastic bags. The films may have integral plastic closure profiles, as for example, is taught in U.S. Patent No. Re 28,969.

In accordance with one aspect of the present invention, a process is provided for severing a plurality of plies of a thermoplastic material and simultaneously sealing the severed margins thereof, comprising the steps of selecting a cutting and sealing element having a length at least as long as the section of the thermoplastic material to be severed and sealed, heating said element to a temperature of from 704°C to 871°C, and bringing said element into proximity with the thermoplastic material to sever the plies and form a sealed edge. Preferably, the cutting and sealing element is in the form of a wire, although other configurations such as a knife blade may be utilized.

In accordance with another aspect, the invention resides in an apparatus for severing a plurality of plies of a thermoplatic material and simultaneously sealing the severed margins thereof, including a material supporting surface containing at least one cavity, an elongated cutting and sealing element located within said cavity, means for heating said element, and means for moving said element from said cavity to contact and sever said thermoplastic material on said supporting surface, characterized by the feature that said heating element is made from a long range ordered alloy.

The heating element is preferably fabricated from a long range ordered alloy such as nickel aluminide

(Ni$_3$Al) alloy containing boron. Such long range ordered alloys are disclosed by Liu, U.S. Patent No. 4,647,427 and Liu et al, U.S. Patent No. 4,612,165. Such long range ordered alloys possess desirable properties for operation at temperatures above about 538° C. A preferred nickel aluminide alloy contains approximately 0.02 percent by weight boron. A preferred cross-section for the cutting and sealing element is an elliptical cross-section having a minor axis length of approximately 0.25 to 1.25 mm and a major axis length of approximately 1.875 to 12.5 mm. Of course, the cutting element may assume other shapes such as the ones disclosed in the above-mentioned U.S. Patent No. 4,396,449. A presently preferred cutting element has a generally elliptical cross-section with a minor axis length of about 0.875 mm and a major axis length of about 2.75 mm. The heating element is heated to a temperature above about 565° C, preferably from 565° to 871° C, more preferably from 704° C to 810° C, and most preferably from 704° C to 788° C, and is then brought into proximity with the thermoplastic material to sever the plies and to form a sealed edge. The heat from the element is generally sufficient to cause severing and sealing of the material without physically contacting the element, although some contact may occur at thickened portions (i.e., closure profiles) along the material.

Typically, the thermoplastic material will be supplied in the form of a continuous web of bag stock which is folded-over and placed across a support surface. Generally, the bag stock will have one or more thickened areas such as the areas where there are closure profiles. The cutting and severing element is positioned in a cavity beneath the support surface and, after being heated to its operating temperature, is moved into proximity with the web. The heat from the element severs and simultaneously seals a marginal edge of the bag, and the web is translated forward across the support surface so that the process can be repeated again.

The long range ordered alloys used for the cutting and sealing element in the practice of the present invention have been found to enable operation of the equipment at higher temperatures than previously possible. Surprisingly, operation at higher temperatures results in less build up of waxy polymer degradation products as well as substantial elimination of odor and off-taste problems. Additionally, the preferred nickel aluminide alloy has been found to be more resistant to oxidation, high temperature creep, and erosion/corrosion problems than previous cutter-sealer element materials, even though operating at higher temperatures.

Accordingly, it is an object of the present invention to provide a cutting and sealing element and process for severing and sealing plies of thermoplastic material in which the element possesses a long cutting life, in which wax build up problems on the equipment are avoided, and in which taste and odor problems are substantially reduced. This, and other objects and advantages of the present invention, will become apparent from the following detailed description, the accompanying drawings, and the appended claims.

Figure 1 is a schematic side view of a typical cutting and sealing apparatus which can incorporate the heating element and process of the present invention;

Figure 2 is an isometric view from one end of the apparatus of Figure 1; and

Figure 3 is a greatly enlarged plan view illustrating the mechanism for translating the wire to contact the thermoplastic material.

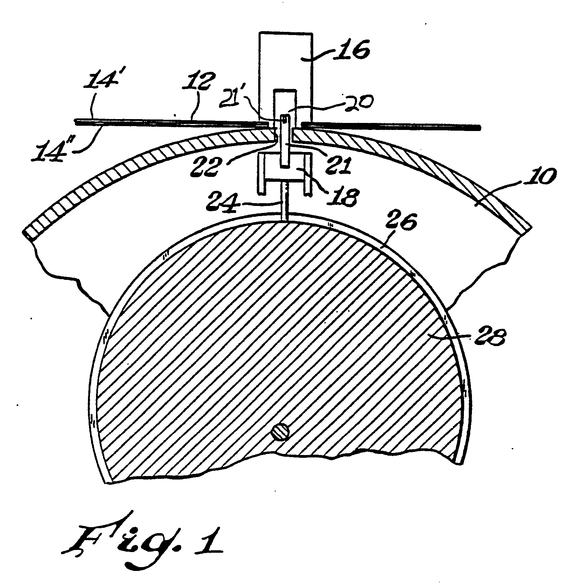

In order to that the invention may be more readily understood, reference is made to the accompanying drawings which illustrate the environment in which the process of the present invention and improved cutting and severing element are found. Figure 1 shows a device which is useful for making plastic bags or containers. A drum 10, which receives a supply of a thermoplastic film or sheet material 12, secures that material 12 to the drum by means of a vacuum. The thermoplastic material 12 comprises plies 14' and 14" of folded-over continuous web stock, which, after severing and sealing, form the opposing faces of individual bags. While a film having folded-over plies is shown, it will be apparent to those skilled in this art that the present invention may be practiced using multiple films or a film having multilayer plies.

A clamp 16 is moved into position to secure material 12 to the drum 10 directly over a movable mechanism 18 which carries an elongated cutting and sealing element 20. Thus, material 12 is clamped immediately adjacent the area in which it is to be severed and sealed and is supported by drum 10. After cutting, the clamp 16 is released. The element 20 is secured to post 21 which has a notch 21' therein. Several such clamping and movable mechanism combinations may be located about the periphery of drum 10 if desired. As shown, element 20 is at least as long as the thermoplastic material 12 to be severed, and preferably extends somewhat beyond either edge of material 12.

Mechanism 18 slides inwardly and outwardly within drum cavity 22 as determined by a connector 24 as it rides along a groove 26 formed about the peripheral edge of an eccentric cam 28. As illustrated in Figure 1, the mechanism 18 is in its outermost position. After being cut and sealed by mechanism 18, the thermoplastic material 12 is thereafter cooled on the drum 10 and taken off as bags. The bags are then collected and boxed.

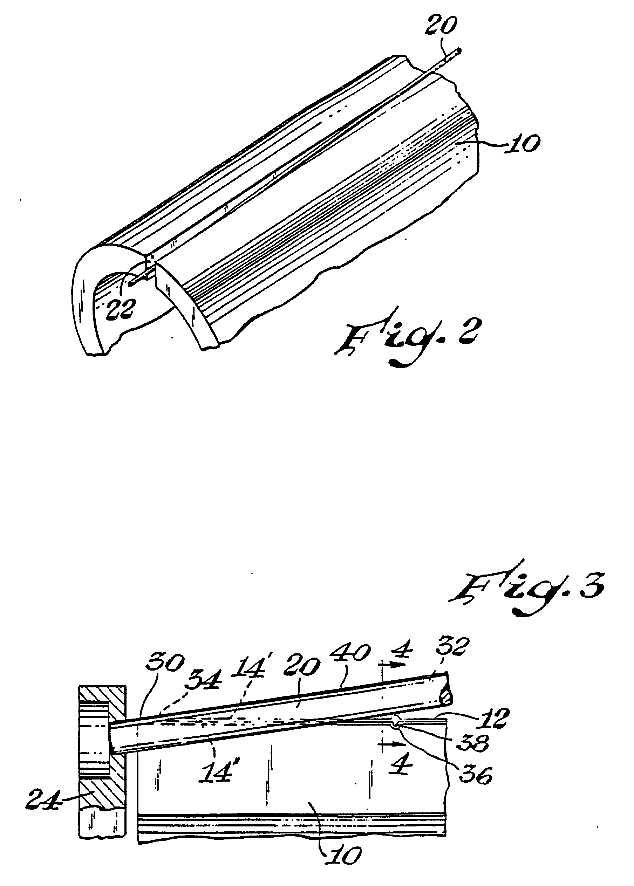

The details of operation of cutting and severing element 20 within cavity 22 of drum 10 are best shown in Figures 2 and 3. It can be seen that element 20 is carried adjacent the ends of the drum and is supported so that its end 30 is supported lower in cavity 22 than its portion 32 adjacent the thicker section of the thermoplastic material 12. This is accomplished by making the support post 21 a different length than its corresponding post (not shown) at the opposite end of mechanism 18. Element 20 is heated through its end connector 24 by conventional means (not shown).

As best illustrated in Figure 3, drum surface 34 contains a groove 36 for carrying a thickened thermoplastic section or protrusion 38, such as a zipper closure profile for engaging opposing plies 14' and 14" of thermoplastic material 12. Above thermoplastic material 12 is the element 20 which is shown in its position after having passed through both plies 14' and 14", simultaneously severing and sealing their edges. The rise of element 20 across drum 10 is higher in the portion 32 than it is at the opposite end 30, as illustrated.

In actual practice, edge 40, which forms the top edge of element 20, is illustrated at about the uppermost preferred limit for travel. This limit is reached where the end 30 has just slightly passed through the thermoplastic material 12. The fact that the element 20 may be put under strain and held down somewhat as it passes through the thickened profile portion 38 is the reason that the suspension of element 20 is preferably higher at that end of mechanism 18.

Also, in a high speed process, if the element rises too far after it passes through the thermoplastic material, there may be a tendency as the thermoplastic film relaxes to be frictionally engaged by the element and pulled and degraded by the heat from element 20. This can be avoided by stopping the element 20 at a desired height after it has passed through the thermoplastic film plies. For example, in a preferred embodiment, the rise of edge 40 may be from 1.27 to 1.5 mm above drum surface 34 at end position 32 and only about 0.5 to 0.6 mm at opposite end position 30.

Severing and cutting element 20 is preferably fabricated of a boron-doped nickel aluminide alloy ($Ni_3Al$). It has been found that such alloys may be long range ordered alloy such as can be heated to temperatures above about 565°C, preferably from 565°C to 871°C. While the alloy can withstand temperatures up to about 1038°C, it is preferred to operate the element at a temperature below 1038°C, to obtain a longer element life. Suitable nickel aluminide alloys are disclosed in Liu et al, U.S. Patent No. 4,612,165, having the following composition by weight:

| Element | Weight % |
|---------|----------|
| Aluminum | 9-12 |
| Chromium | 0-5 |
| Iron | 0-10 |
| Boron | 0.015-0.03 |
| Hafnium | 0-0.06 |
| Nickel | balance |

A preferred alloy included a small amount of Hafnium, preferably from 0.03 to 0.06 weight percent.

The alloy may be formed as a rod and then drawn into a wire. The wire may have a circular or elliptical cross-section, or may have any of the several cross-sectional shapes disclosed in U.S. Patent No. 4,396,449. Preferably, the element is drawn to a relatively small elliptical cross-section in the range of from 0.25 to 1.27 mm for the length of the minor axis and from 1.9 to 12.7 mm for the length of the major axis.

Use of a long range ordered alloy as the severing and sealing element in the practice of the present invention provides several distinct advantages over previously used elements such as Inconel 625. Present heating elements such as Inconel 625, may be operated in the range of from 565° to 649°C, however, operation at higher temperatures is not practical as at the higher temperatures, the elements exhibit a high failure rate. Even at present operating temperatures, the elements have limited lifespans due to oxidation, high temperature creep, and erosion or corrosion of the elements.

At present temperatures of operation, some polymer degradation occurs when the hot element passes through the thermoplastic web producing compounds which build up on equipment and/or produce off-flavors or odors in the bags. In many instances, visible smoke is generated. Over time, waxy compounds build up on the surfaces of the equipment necessitating down time for clean up. Also, some of the off-flavor producing compounds find their way onto the surface and into the interior of the bags, which causes perceptible odor problems as well as imparting off-flavors to foods stored within.

It has been found that operation of the element at higher temperatures above about 704°C, and preferably from 704° to 871°C, significantly reduces the evolution of smoke during the severing and sealing operation with a concomitant reduction in build up of waxy compounds, odors, and off-flavors in food stored within the bags. While not wishing to be bound by any specific theory, it is believed that the higher temperatures of operation made possible by the use of the long range ordered alloy element results in significantly greater polymer degradation . This, in turn, results in lower molecular weight degradation products being formed, resulting in less build up of waxy solids and less production of sensorially offensive compounds.

Additionally, such lower molecular weight products are believed to have higher diffusion rates so that if entrapped within the bags, the products will quickly diffuse out. Finally, at the higher operating temperatures, there is believed to be less physical contact between the element and the thermoplastic web. That is, the heat from the element as it approaches the web will tend to sever and seal the web with little or no actual physical contact. This reduces the build up of waxy solids on the element.

Not only do the long range ordered alloy elements permit higher temperatures of operation than heretofore possible, but it has been found that even at such high temperatures, such alloys are more resistant to oxidation, high temperature creep, and erosion or corrosion problems than prior elements.

In order that the invention may be more readily understood, reference is made to the following examples, which are intended to illustrate the invention, but are not to be taken as limiting the scope thereof.

## Example 1

A 0.03 inch (0.762 mm) diameter nickel aluminide doped with boron alloy wire was installed on a hot wire severing and sealing machine as illustrated in the drawings. Wire temperatures were controlled by controlling the amperage to the wire. Actual wire temperatures were measured with an optical pyrometer. Tests were run at wire temperatures of 1050 and 1600°F (565° and 871°C), respectively. Eighty sample one quart (0.95 lit.) storage bags made of polyethylene having 0.010 inch (0.254 mm) thick plies were produced at each temperature. The samples were boxed into four dispensers, with 20 bags to a dispenser.

Taste tests were then administered to panelists as follows. Bags made at each temperature were tested by selecting four bags from each dispenser and placing approximately 15 grams of crushed potato chips in each bag. The bags were then zipped closed, individually wrapped in wax paper to keep bag odors in and room odors out, and stored at constant temperature for 24 hours. Potato chips were used as the test medium as the oil from the chips tends to absorb any odors within the bags.

After 24 hours, the chips from each bag were placed on paper plates, and along with 2 plates of control chips, were arranged on a tray. One of the control samples was labeled as such while the other was used as a hidden control. Ten panelists were then asked to compare the flavor of each sample of chips with the control sample. For each sample, the panelists checked "yes" if they agreed that the test sample tested the same as the control sample. If a panelist detected an off-taste, the panelist checked "no", and the degree of "off" taste was indicated as either "slight", "medium", or "strong". The percentage of "off" taste detection was the calculated by dividing the number of "no's", irrespective of degree of "off" taste, by the total number of responses. The results were then averaged for each wire temperature and are reported in Table 1 below. The tests were repeated after 9 and 16 days, respectively. Based on previous tests, an approximately 8 percent rate of detection is expected for chips which have been wrapped in unsealed plastic film.

## TABLE 1
## % Taste Detection

| Wire Temp.<br>°F(°C) | 2 Days | 9 Days | 16 Days |
|---|---|---|---|
| 1050 (565) | 73 | 60 | 35 |
| 1600 (871) | 43 | 8 | 10 |

As can be seen, the higher wire temperature resulted in a significant reduction in the perception of "off" tastes or flavors.

Example 2

Additional taste tests were performed utilizing the same test procedures as in Example 1. A 0.03 inch (0.762 mm) diameter wire of a nickel aluminide alloy doped with boron was used as the severing and sealing element. Wire temperatures were controlled and measured as in Example 1. Bag samples were 15 count quart width, gallon depth polyethylene containers. Wire temperatures of 600°, 1000°, 1400° and 1600° F (315.6°, 537.8°, 760° and 871° C) were studied. The results are reported in Table 2 below.

## TABLE 2
## % Taste Detection

| Wire Temp.<br>°F (°C) | 2 days | 9 days | 16 Days | 23 Days |
|---|---|---|---|---|
| 600 (315.6) | 100 | 78 | 43 | 55 |
| 1000 (537.8) | 78 | 80 | 60 | 78 |
| 1400 (760) | 48 | 30 | 18 | 28 |
| 1600 (871) | 83 | 60 | 38 | 33 |

As can be seen, the higher wire temperatures, namely 1400° F (760° C) and 1600° F (871° C), resulted in a significant reduction in the perception of off-tastes or flavors as compared with lower wire temperature. Operation at 1400° F (760° C) produced the best results.

Example 3

Experimental runs were made to quantify the presence of certain volatile aldehyde compounds which are formed as degradation products when the polyethylene bag stock material is severed and sealed by a hot wire cutting element. Such aldehyde compounds are believed to contribute to the off-tastes and flavors perceived by consumers of foods stored within such bags, with threshold effects in the parts per billion range.

The same test conditions as reported in Examples 1 and 2 above were utilized. The gases inside of quart width, gallon depth polyethylene bags were identified and quantified using liquid chromatography techniques. In this example, analysis was made for the presence of the six carbon aldehyde (hexanal). Taste tests were made as in Examples 1 and 2 above. The results are reported in Table 3 below.

6

## TABLE 3

| Wire Temp.<br>°F (°C) | C (6) Concentration<br>(ppb) | %Taste Detection<br>(1 day) |
|---|---|---|
| 600 (315.6) | 650 | 100 |
| 1000 (537.8) | 115 | 78 |
| 1400 (760) | 45 | 48 |
| 1600 (871) | 90 | 83 |

As can be seen, a rough correlation is established between wire temperature, C(6) concentration, and off-taste perception, with generally higher wire temperatures producing lesser concentrations of such degradation compounds and fewer perceptions of off-tastes. However, operation at 1600°F (871°C) did not produce as good results as operation at 1400°F (760°C).

Example 4

Experimental runs were made to quantify the presence of certain volatile aldehyde compounds which are believed to form as degradation products during the hot wire severing and sealing of polyethylene bags. Such aldehyde compounds are believed to contribute to the off-tastes and flavors perceived by consumers of foods stored within such bags.

The same test conditions as reported in the previous examples were utilized. The gases inside quart width, gallon depth polyethylene bags were identified and quantified using liquid chromatography techniques. Analyses were made for the presence of five, six and seven carbon aldehydes (i.e., pentanal, hexanal, and heptanal). The results are reported in Tables 4A and 4B below.

## TABLE 4A

| Wire Temp.<br>°F (°C) | C(5)<br>Concentration<br>(ppb) | C(6)<br>Concentration<br>(ppb) | C(7)<br>Concentration<br>(ppb) |
|---|---|---|---|
| 1150 (621) | 675 | 600 | 620 |
| 1250 (677) | 145 | 290 | 220 |
| 1350 (732) | 60 | 125 | 105 |
| 1450 (788) | 80 | 25 | 90 |
| 1550 (843) | 80 | 130 | 175 |

EP 0 316 714 A2

## TABLE 4B
## % Taste Detection

| Wire Temp. °F (°C) | 8 Days | 1 Day |
|---|---|---|
| 1150 (621) | -- | 98 |
| 1250 (677) | 85 | 88 |
| 1350 (732) | 70 | 80 |
| 1450 (788) | 48 | 83 |
| 1550 (843) | 18 | 73 |

As can be seen, a correlation is established between wire temperature, degradation compound concentration, and off-taste perception with generally higher wire temperatures producing lesser concentrations of such compounds and fewer perceptions of off-tastes. Somewhat surprisingly, at the highest temperature tested, the measured concentration of degradation products increased somewhat, although it remained lower than at low wire temperatures, i.e., 1250° F (676.7° C) and below. The test data for this and the previous examples indicate a rough range of wire temperatures of from 704° C to 871° C with 1400° F (760° C) as the optimum as an optimum range for minimizing the production of aldehyde degradation products and off-taste perceptions.

While certain representative embodiments and details have been shown for purposes of illustrating the invention, it will be apparent to those skilled in the art that various changes in the methods and apparatus disclosed herein may be made without departing from the scope of the invention, which is defined in the appended claims.

## Claims

1. A process for severing a plurality of plies of a thermoplastic material and simultaneously sealing the severed margins thereof comprising the steps of:

a) selecting a cutting and sealing element having a length at least as long as the section of thermoplastic material to be severed and sealed,

b) heating said element to a temperature of from 704° C to 871° C, and

c) bringing said element into proximity with said thermoplastic material to sever said plies and form a sealed edge.

2. The process of Claim 1 in which said element is heated to a temperature of from 704° to 816° C.

3. An apparatus for severing a plurality of plies of a thermoplastic material and simultaneously sealing the severed margins thereof, including a material supporting surface containing at least one cavity, an elongated cutting and sealing element located within said cavity, means for heating said element, and means for moving said element from said cavity to contact and sever said thermoplastic material on said supporting surface, characterized by the feature that said heating element is made from a long range ordered alloy.

4. The apparatus of Claim 3, wherein said heating element is fabricated from a $Ni_3Al$ alloy containing boron.

5. The apparatus of Claim 3 or 4 wherein said heating element is in the form of a knife blade.

6. The apparatus of Claim 3 or 4 wherein said heating element has an elliptical cross-section having a minor axis length of from 0.25 to 1.25 mm and a major axis length of from 1.8 to 12.5 mm.

7. The apparatus of Claim 3 or 4 wherein said heating element is a wire having a circular cross-section and a diameter of about 0.75 mm.

8. The apparatus of Claim 3 wherein said alloy has the following composition by weight: aluminum; from 9 to 12 percent, chromium; from 0 to 5 percent, iron; from 0 to 10 percent, boron; from 0.015 to 0.03 percent, hafnium; from 0 to 0.06 percent, and the balance nickel.

9. The apparatus of Claim 8, wherein said alloy contains from 0.03 to 0.06 percent hafnium.

Fig. 1

*Fig. 2*

*Fig. 3*